# EUROPEAN PATENT SPECIFICATION

(11) **EP 0 932 355 B1**
(45) Date of publication and mention of the grant of the patent: **25.09.2002**
(21) Application number: 96941816.9
(22) Date of filing: 09.12.1996
(51) Int. Cl.: A47J 31/04

(54) **PRESSURE COFFEE MAKER FOR PREPARING COFFEE INFUSIONS**
DAMPFDRUCK-KAFFEEMASCHINE ZUM ZUBEREITEN VON KAFFEEAUFGÜSSEN
CAFETIERE A PRESSION POUR PREPARER DES INFUSIONS DE CAFE

(30) Priority: 18.10.1996 IT MI962173
(43) Date of publication of application: 04.08.1999
(60) Divisional application: 02075371.1
(73) Proprietor: S.P.A. Alfonso Bialetti & C., 28023 Omegna (IT)
(72) Inventor: MORONI, Ugo, I-27043 Broni (IT); RANZONI, Francesco, I-25032 Chiari (IT)
(74) Representative: Siniscalco, Fabio
(86) International application number: IT9600247
(87) International publication number: WO98017160

(56) References cited:
- AT-A- 25 084
- FR-A- 875 571
- FR-A- 1 061 936
- FR-A- 1 206 493
- US-A- 3 077 156

## Description

The subject of the present invention is a pressure coffee maker for preparing coffee infusions.

Pressure coffee makers are known that comprise a boiler designed to contain the water which is to be heated up, a coffee vessel designed to hold a given amount of coffee powder, and a collecting vessel for collecting the coffee infusion.

Once water has been poured into the boiler and the coffee vessel has been filled with coffee powder, the water is brought to the boil in the boiler and, according to a well-known operating principle, the pressure generated inside the boiler as the water is heated forces the water up and through the coffee powder, through a filter in the coffee vessel and out through a second filter in the collecting vessel; the coffee infusion obtained in this way rises up a dispensing duct inside the collecting vessel and flows out of the top of the duct and into the collecting vessel.

This coffee maker is predominantly for domestic use and the boiler usually consists of a reservoir which is heated on a conventional cooker.

This method of preparing coffee is commonly used since it is simple, given the basic operations required, and cheap, given that the coffee maker itself is inexpensive.

However, the coffee infusion produced is not of an optimum quality since at the beginning of the cycle, before the temperature of the water has reached the correct infusion temperature, the pressure inside the boiler is already sufficient to allow warm water to pass into the coffee vessel which then causes the coffee to infuse at a temperature below the correct temperature; later infusion takes place at the correct temperature; and lastly, towards the end of the cycle, infusion takes place at a temperature higher than the correct temperature.

At all events, the coffee produced does not look as good, smell as good or taste as good as that which can be made using espresso coffee machines. This is because in these machines the various parameters of the water, such as its temperature, pressure and speed, are set and constantly monitored so that an excellent cup of coffee is produced.

Obviously; these machines are much more expensive than coffee makers and also require greater expertise and more careful and regular maintenance.

What is more, the domestic models of these machines, even though obviously cheaper than the professional machines used in the trade, are still much bulkier than a coffee maker and require a space to be permanently set aside for them.

From FR-A-1061936, US-A-3077156 a coffee maker is known wherein the path between the boiler and the collecting vessel is closed off and is opened up once a predetermined overpressure with respect to atmospheric pressure is attained in the boiler, in order to improve the quality of the coffee.

The object of the present invention is to provide a coffee maker which can produce a cup of coffee having similar characteristics to the coffee produced using espresso coffee machines and which is particularly simple and reliable.

This object is achieved by means of a coffee maker according to independent claims 1 or 5.

In order to give a clearer understanding of the invention, two non-limiting embodiments thereof are described below and illustrated in the appended drawings, in which:
Fig. 1 is a sectional view of a coffee maker according to the invention;
Fig. 2 shows the way in which the coffee maker shown in Fig. 1 works;
Fig. 3 is a perspective view of a detail of the coffee maker shown in Fig. 1;
Fig. 4 is an exploded perspective view of another detail of the coffee maker shown in Fig. 1;
Figs 5 and 6 show the way in which the detail shown in Fig. 4 works;
Fig. 7 is a sectional view of another coffee maker according to the invention;
Fig. 8 shows the way in which the coffee maker shown in Fig. 7 works.

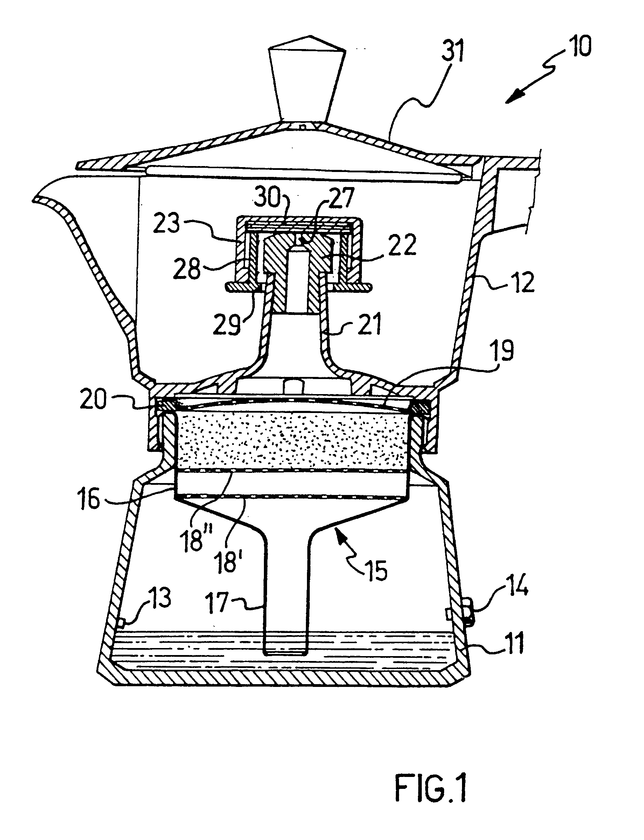

The coffee maker illustrated in Fig. 1, indicated as a whole by the reference numeral 10, comprises a boiler 11, consisting of a reservoir, and a collecting vessel 12 screwed on to the top of the boiler 11.

A reference mark 13, which consists of a protruding line, is provided at a given height on the inside surface of the boiler 11 and indicates the level to which the boiler should be filled with water. A safety valve 14 is also fixed to the wall of the boiler 11.

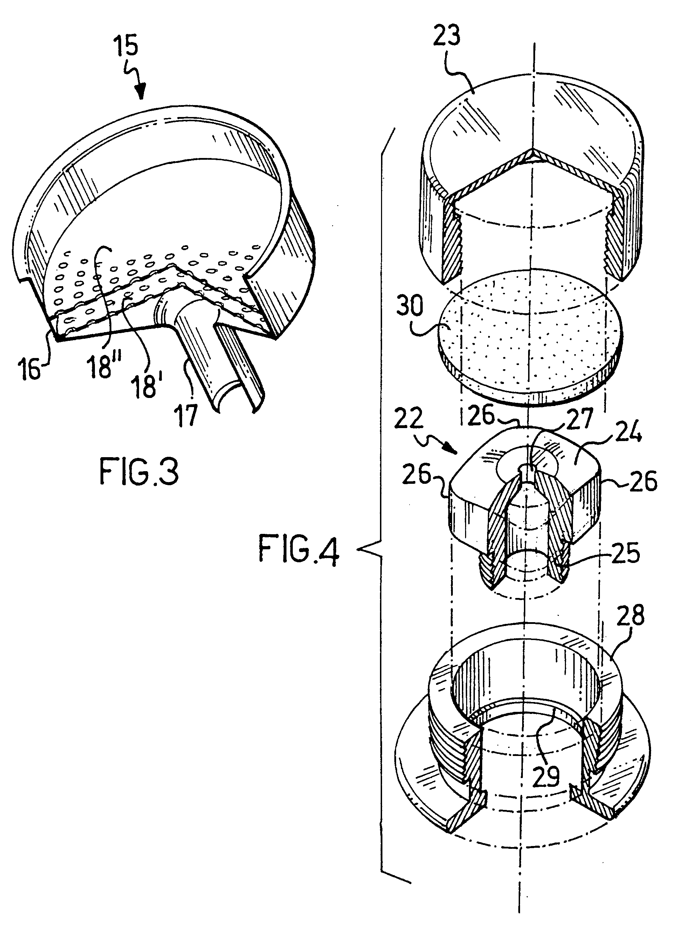

The boiler 11 accommodates a removable coffee vessel 15 (see also Fig. 3) comprising a cup part 16, the bottom of which extends into a tube 17 which is joined to the cup part by means of a conical portion. Two filters 18' and 18'', each consisting of a disc with a plurality of small holes, are provided inside the cup part 16; these filters 18' and 18'' are integral with the cup part 16 and are arranged so that filter 18' lies in the base of the cup part while filter 18'' is raised a set distance above filter 18'. The rim of the coffee vessel 15 rests on the rim of the boiler 11.

On the bottom of the collecting vessel 12, above the coffee vessel 15, there is a filter 19 which also consists of a disc with small holes. Also on the bottom of the collecting vessel 12 is a seal 20 which comes between the collecting vessel and the boiler 11 and provides a leaktight joint between these two elements. Rising up in the centre of the collecting vessel 12 is a vertical dispensing duct 21, on the top portion of which are mounted valve means. These valve means comprise (see also Fig. 4) a nozzle 22 which is screwed into this top portion of the duct 21 and a shut-off cap 23 which has a set weight and presses on the nozzle 22 as a result of gravity. The nozzle 22 is hollow on the inside and consists of a head 24 and a threaded stem 25 which is screwed into the duct 21. The head 24 is square in shape with rounded corners 26 and also has a calibrated axial dispensing hole 27. The shut-off cap 23 is a hollow cylinder and is held on the nozzle 22 by means of a ring 28 on to which the shut-off cap screws. During assembly, the ring 28 is first fitted on to the duct 21, then the nozzle 22 is screwed into the duct 21, and lastly the shut-off cap 23 is screwed on to the ring 28. This ring has a internal flange 29 designed to bear against the corners 26 of the head 24, thereby preventing the shut-off cap from coming off the nozzle. The top of the shut-off cap 23 has a recess which accommodates a disc-shaped seal 30 that comes into contact with the head 24 of the nozzle 22, which head closes off the calibrated hole 27. A lid 31 is hinged to the collecting vessel 12.

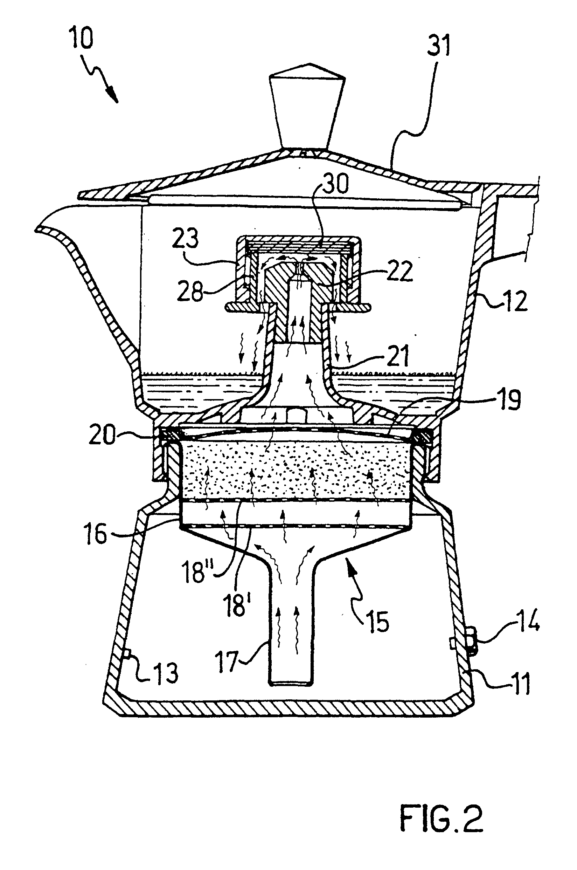

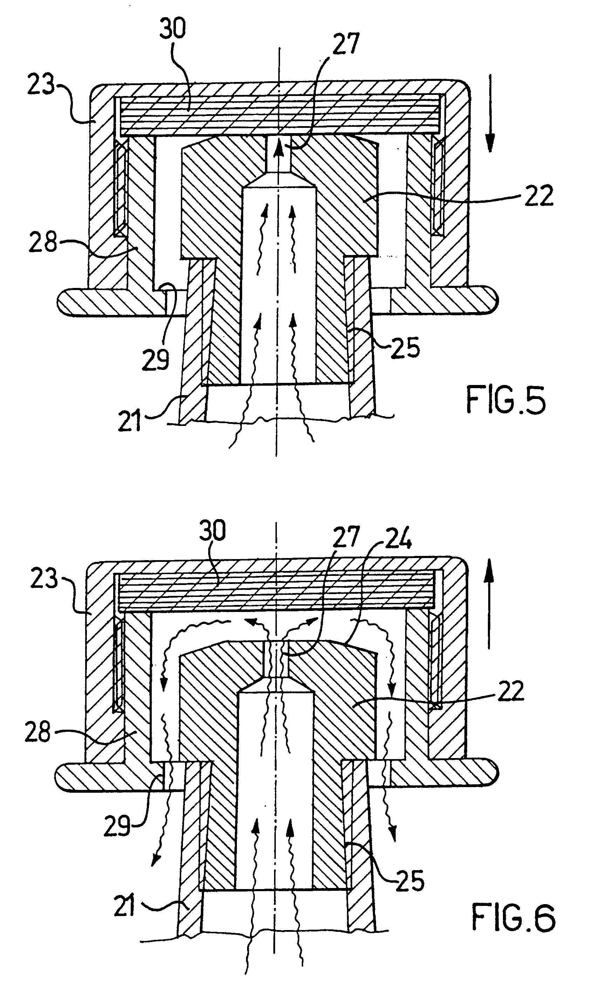

The operation and method of use of the coffee maker 10 described above and illustrated will now be described with reference to Figs 1, 2, 5 and 6.

The collecting vessel 12 is unscrewed from the boiler 11 and the coffee vessel 15 is removed from the boiler. The boiler 11 is then filled with water up to the level indicated by the reference mark 13, the coffee vessel 15 is replaced in the boiler and the cup part 16 of the coffee vessel 15 is filled with coffee powder. The collecting vessel 12 is then screwed back on to the boiler 11 and the coffee maker is placed on a heat source, such as a gas cooker or an electric hotplate, or some other source of heat.

The water and air inside the boiler 11 heat up, causing the pressure inside the boiler to increase. As the pressure increses, the hot fluid begins to rise along the path formed by the tube 17, the cup part 16, in which the water spreads out and completely bathes the coffee powder after passing through the filters 18' and 18'', the duct 21 which the infusion produced reaches after passing through the filter 19, and the nozzle 22. Once a predetermined pressure above atmospheric pressure has been reached, the shut-off cap 23 lifts up, thereby opening up the calibrated hole 27. At this point all the fluid flows rapidly along the abovementioned path and the infusion thus produced comes out of the hole 27, passes through the spaces formed between the shut-off cap 23 and the nozzle 22 as a result of the different shapes of these two components, and spills out into the collecting vessel 12.

The coffee made in this way boasts characteristics similar to those of coffee prepared using espresso coffee machines and in particular has a creamy top and a similar taste.

These results are possible by virtue of the valve means which allow specific physical and dynamic conditions in the preparation of the coffee, such as the boiler pressure at which the water is forced to rise up and infuse the coffee, and the temperature and speed of the water which are both dependent on this pressure value, to be predetermined.

This pressure value is preferably greater than 1.4 bar. Needless to say, the weight of the shut-off cap 23 and the diameter of the nozzle 22 will be functions of this pressure value.

The water/air volumetric ratio does not exceed 1:2 and, preferably, as in the example illustrated, is less than 1:3.

The fact that the coffee powder is supported on the top filter 18'', which is raised above the base of the cup part, together with the presence of the filters 18' and 18'', means that the coffee powder is bathed uniformly by the water as it rises and covers the entire surface of the coffee, preventing the formation of preferential fluid trickles which would reduce infusion efficiency. Needless to say, the top filter 18'' and the filter 19 prevent the coffee powder from spilling out of the recess formed for it by the said filters.

The valve means described and illustrated are simple in terms of both their structure and function. This is because they consist of only a few components and the shut-off cap works solely by gravity. As far as maintenance is concerned, these valve means can easily be dismantled and reassembled by means of basic unscrewing and screwing actions without the need for tools.

The shut-off cap 23 also acts as a splash guard, preventing splashes of coffee spattering out of the collecting vessel 12.

In the event of a malfunction, the safety valve 14 prevents dangerous overpressures from building up in the coffee maker.

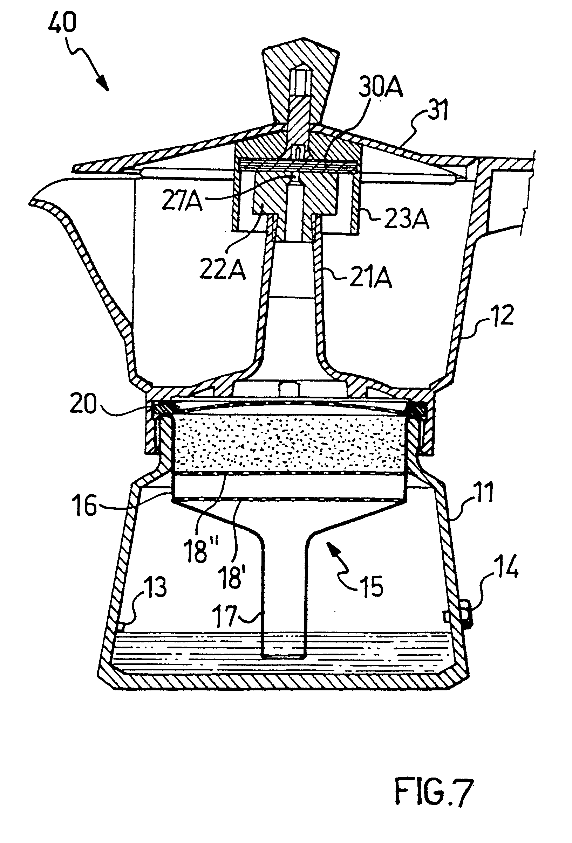

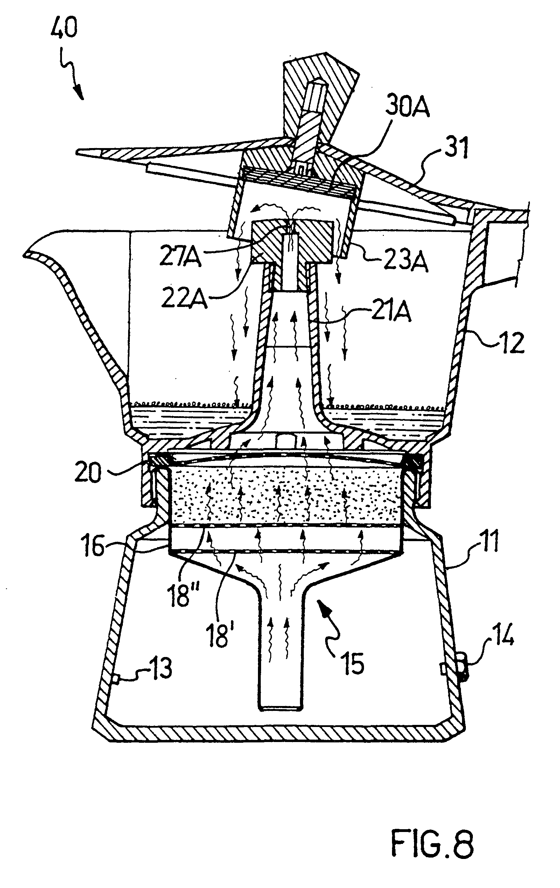

Figs 7 and 8 show another coffee maker, indicated as a whole by the reference numeral 40, which is basically the same as the coffee maker 10, but in which the shut-off cap is fixed to the lid 31. In the coffee maker 40, the dispensing duct, the nozzle and its associated parts, and the shut-off cap and its associated parts are indicated using the same reference numerals as for the coffee maker 10 but, as they are slightly different, these reference numerals are followed by the letter A, whereas the other components, which are identical to those of the coffee maker 10, are indicated using the same reference numerals. In this second embodiment, once the pressure in the boiler has reached a pre-established threshold, instead of only the shut-off cap lifting up, the shut-off cap/lid assembly lifts up, as shown in Fig. 8. Needless to say, in this case, the abovementioned assembly needs to be calibrated so that the hole 27 in the nozzle 22 opens up at the pre-established pressure value. Elastic snap-fastening elements may also be incorporated between the lid 31 and the collecting vessel 12 which allow the lid a small amount of play in order to lift up the shut-off cap, and which, by means of a simple unfastening action, allow the lid to be fully opened whenever necessary and then, by means of a fastening action, allow it to be closed again.

The components of both coffee makers can be made of any material, for example aluminium, steel, or some other material. The shut-off cap, together with its corresponding ring in the embodiment of Fig. 1, can also be made of a heat-insulating material, such as teflon®, so as to prevent the coffee infusion from cooling down as it comes out of the nozzle; in this case, these components can have a metal core so as to make them heavier.

Modifications or additions may be made to the coffee makers described and illustrated.

The coffee maker need not have the shape illustrated and can come in any shape, as long as the coffee can be prepared in the way envisaged.

The same applies to the coffee maker components. The coffee vessel may have a single, raised, filter, even though the double-filter version illustrated enables an optimum infusion to be produced. The water level reference mark may be made using any means suited to the purpose. The nozzle can be of any polygonal shape or may be of another suitable shape.

The boiler may include electrical heating elements which can be connected to any electricity supply, thereby doing away with the need for a cooker.

It would also be possible to dispense the coffee infusion directly into the cups via the dispensing duct (or several dispensing ducts). In this case, the cups themselves act as the collecting vessel rather than a container that forms part of the coffee maker.

The coffee maker can be filled with loose coffee powder or with coffee powder which has been packed in a special permeable sachet designed to fit in the cup part of the coffee vessel.

## Claims

1. Coffee maker (10) comprising a boiler (11) designed to contain the water which is to be heated up, a coffee vessel (15) designed to hold a given amount of coffee powder, and a collecting vessel (12) designed to collect the coffee infusion produced as the hot water passes through the coffee powder, in which the coffee vessel (15) is in communication on the one hand with the inside of the boiler (11) and on the other hand with a duct (21) through which the coffee is dispensed, and comprising a shut-off cap (23) positioned on the outlet of the coffee-dispensing duct (21) for closing off by gravity said outlet of the coffee-dispensing duct (21) in order to create a predetermined overpressure in the boiler (11) with respect to the atmospheric pressure and which opens up once the said overpressure in the boiler (11) has been attained, **characterized in that** retention means (26) are provided mounted in a removable manner on the duct (21) at the outlet of the duct (21) for holding the shut-off cap (23) on the duct (21), the shut-off cap (23) being able to move between a position of closing off the outlet of the duct (21) and a lifted position in which it is held by the retention means (26).

2. Coffee maker according to Claim 1, in which the said shut-off cap (23) is mounted on a nozzle (22) located on the outlet end of the duct (21).

3. Coffee maker according to Claim 2, in which the shut-off cap (23) is a hollow cylinder with its top pressing on the nozzle (22), in which the nozzle (22) is polygonal in shape, and in which a ring (28) is provided which is removably coupled to the shut-off cap (23) and has a internal flange (29) opposite the top of the shut-off cap (23) so that the nozzle (22) lies between the said top and the said flange, the said flange (29) being designed to bear against the corners (26) of the nozzle (22) in order to hold the shut-off cap (23) on the nozzle (22).

4. Coffee maker according to Claim 3, in which a leaktight seal (30) that closes off the hole (27) in the nozzle (22) is housed in the top of the shut-off cap (23).

5. Coffee maker (40) comprising a boiler (11) designed to contain the water which is to be heated up, a coffee vessel (15) designed to hold a given amount of coffee powder, and a collecting vessel (12) designed to collect the coffee infusion produced as the hot water passes through the coffee powder, in which the coffee vessel (15) is in communication on the one hand with the inside of the boiler (11) and on the other hand with a duct (21A) through which the coffee is dispensed, and comprising a shut-off cap (23A) positioned on the outlet of the coffee-dispensing duct (21A) for closing off by gravity said outlet of the coffee-dispensing duct (21A) in order to create a predetermined overpressure in the boiler (11) with respect to the atmospheric pressure and which opens up once the said overpressure in the boiler (11) has been attained,, **characterized in that** the shut-off cap (23A) is fixed to a lid (31) which is hinged to the collecting vessel (12) and closes off the end of the coffee-dispensing duct (21A).

6. Coffee maker according to Claim 5, in which the shut-off cap (23A) is hollow and, with its top, closes off a nozzle (22A) which is fixed to the said end of the coffee-dispensing duct (21A).

7. Coffee maker according to Claim 6, in which a leaktight seal (30A) which closes off the hole (27A) in the nozzle (22A) is housed in the top of the shut-off cap (23A).

8. Coffee maker according to any one of the preceding claims, in which the overpressure generated in the boiler (11) by the said shut-off cap (23; 23A) is greater than 1.4 bar.

9. Coffee maker according to any one of the preceding claims, in which the boiler (11) comprises reference means (13) which define a water/air volumetric ratio in the boiler which does not exceed 1:2.

10. Coffee maker according to Claim 9, in which the said reference means (13) define a water/air volumetric ratio in the boiler which is less than 1:3.

11. Coffee maker according to any one of the preceding claims, in which the coffee vessel (15) comprises a cup part (16) and a tube (17) that places the cup part (16) in communication with the boiler (11) so that the water can pass up into it, and in which the cup part (16) is joined to the tube (17) by means of a conical portion and has a perforated filter (18') in the base of the cup part (16) and an additional perforated filter (18''), which supports the coffee powder, positioned a short distance above the preceding filter (18').

12. Method of preparing coffee by using a coffee maker according to any of the Claims from 1 to 7, in which the said overpressure in the boiler (11) exceeds 1.4 bar.

13. Method of preparing coffee by using a coffee maker according to any of the Claims 1 to 7 or according to method claim 12, in which the water/air volumetric ratio in the boiler (11) does not exceed 1:2.

14. Method according to Claim 13, in which the water/air volumetric ratio in the boiler (11) is less than 1:3.

15. Method according to any of the Claims 12, 13, 14, in which the flow of water through the coffee vessel (15) spreads out until its cross-section is equal to the surface area of the coffee powder to be infused and, after a predetermined distance, the flow of water is brought into contact with the coffee 0 powder.

## Patentansprüche

1. Kaffeemaschine (10) mit einem Sieder (11) für das zu erwärmende Wasser, einem Kaffeebehälter (15) zur Aufnahme einer bestimmten Menge an Kaffeepulver, einem Sammelgefäß (12) zum Sammeln des Kaffeeaufgusses, der beim Hindurchlaufen des warmen Wassers durch das Kaffeepulver erzeugt wird, wobei der Kaffeebehälter (15) einerseits mit dem Inneren des Sieders (11) und andererseits mit einer Leitung (21), durch die der Kaffee ausströmt, räumlich verbunden ist, sowie einer am Auslass der Kaffeeausströmleitung (21) angeordneten Absperrkappe (23), die durch Schwerkraft diesen Auslass der Kaffeeausströmleitung (21) schließt, um in Bezug auf den atmosphärischen Druck im Sieder (11) einen bestimmten Überdruck zu erzeugen, und sich öffnet, sobald im Sieder (11) dieser Überdruck erreicht ist,
**dadurch gekennzeichnet,**
**dass** am Auslass der Leitung (21) eine Rückhalteeinrichtung (26) entfernbar angebracht ist, um die Absperrkappe (23) auf der Leitung (21) zu halten, wobei sich die Absperrkappe (23) zwischen einer Position, in der sie den Auslass der Leitung (21) schließt, und einer Hubposition, in der sie von der Rückhalteeinrichtung (26) gehalten wird, hin und her bewegen kann.

2. Kaffeemaschine nach Anspruch 1, bei der die Absperrkappe (23) auf einer am Auslass der Leitung (21) angeordneten Düse (22) angebracht ist.

3. Kaffeemaschine nach Anspruch 2, bei der es sich bei der Absperrkappe (23) um einen hohlen Zylinder handelt, dessen Oberteil auf die Düse (22) drückt, wobei die Düse (22) polygonal geformt ist, und wobei ein Ring (28) vorgesehen ist, der mit der Absperrkappe (23) lösbar verbunden ist und einen vom Oberteil der Absperrkappe (23) abgewandten Innenflansch (29) aufweist, so dass sich die Düse (22) zwischen diesem Oberteil und diesem Innenflansch (29) befindet, wobei der Innenflansch (29) an den Ecken (26) der Düse (22) anstößt, um die Absperrkappe (23) auf der Düse (22) zu halten.

4. Kaffeemaschine nach Anspruch 3, bei der im Oberteil der Absperrkappe (23) eine Dichtung (30) angebracht ist, die das in der Düse (22) gebildete Loch (27) schließt.

5. Kaffeemaschine (40) mit einem Sieder (11) für das zu erwärmende Wasser, einem Kaffeebehälter (15) zur Aufnahme einer bestimmten Menge an Kaffeepulver, einem Sammelgefäß (12) zum Sammeln des Kaffeeaufgusses, der beim Hindurchlaufen des warmen Wassers durch das Kaffeepulver erzeugt wird, wobei der Kaffeebehälter (15) einerseits mit dem Inneren des Sieders (11) und andererseits mit einer Leitung (21A), durch die der Kaffee ausströmt, räumlich verbunden ist, sowie einer am Auslass der Kaffeeausströmleitung (21A) angeordneten Absperrkappe (23A), die durch Schwerkraft diesen Auslass der Kaffeeausströmleitung (21A) schließt, um in Bezug auf den atmosphärischen Druck im Sieder (11) einen bestimmten Überdruck zu erzeugen, und sich öffnet, sobald im Sieder (11) dieser Überdruck erreicht ist,
**dadurch gekennzeichnet,**
**dass** die Absperrkappe (23A) an einem Deckel (31), der am Sammelgefäß (12) schwenkbar angebracht ist, befestigt ist und das Ende der Kaffeeausströmleitung (21A) schließt.

6. Kaffeemaschine nach Anspruch 5, bei der die Absperrkappe (23A) hohl ist und mit ihrem Oberteil eine Düse (22A) schließt, die am Ende der Kaffeeausströmleitung (21A) befestigt ist.

7. Kaffeemaschine nach Anspruch 6, bei der im Oberteil der Absperrkappe (23A) eine Dichtung (30A) angebracht ist, die das in der Düse (22A) gebildete Loch (27A) schließt.

8. Kaffeemaschine nach einem der vorhergehenden Ansprüche, bei der der durch die Absperrkappe (23A) im Sieder (11) erzeugte Überdruck mehr als 1,4 Bar beträgt.

9. Kaffeemaschine nach einem der vorhergehenden Ansprüche, bei der der Sieder (11) eine Bezugseinrichtung (13) umfasst, die im Sieder (11) ein Wasser-Luft-Volumenverhältnis vorgibt, das 1: 2 nicht überschreitet.

10. Kaffeemaschine nach Anspruch 9, bei der die Bezugseinrichtung (13) im Sieder (11) ein Wasser-Luft-Volumenverhältnis vorgibt, das kleiner als 1: 3 ist.

11. Kaffeemaschine nach einem der vorhergehenden Ansprüche, bei der der Kaffeebehälter (15) ein Napfteil (16) und ein Rohr (17), das das Napfteil (16) mit dem Sieder (11) räumlich verbindet, so dass das Wasser in das Napfteil (16) hinaufströmen kann, umfasst, wobei das Napfteil (16) über einen konischen Abschnitt mit dem Rohr (17) verbunden ist und einen perforierten Filter (18') an seiner Basis und einen zusätzlichen perforierten Filter (18"), der das Kaffeepulver trägt und kurz oberhalb des Filters (18') angeordnet ist, aufweist.

12. Verfahren zum Kochen von Kaffee unter Verwendung einer Kaffeemaschine gemäß einem der Ansprüche 1 bis 7, bei dem der im Sieder (11) erzeugte Überdruck mehr als 1,4 Bar beträgt.

13. Verfahren zum Kochen von Kaffee unter Verwendung einer Kaffeemaschine gemäß einem der Ansprüche 1 bis 7 oder nach dem Verfahrensanspruch 12, bei dem das Wasser-Luft-Volumenverhältnis im Sieder (11) nicht mehr als 1: 2 beträgt.

14. Verfahren nach Anspruch 13, bei dem das Wasser-Luft-Volumenverhältnis im Sieder (11) kleiner als 1 : 3 ist.

15. Verfahren nach einem der Ansprüche 12, 13 und 14, bei dem der Wasserstrom durch den Kaffeebehälter (15) sich ausbreitet, bis sein Querschnitt so groß ist wie der Oberflächenbereich des aufzugießenden Kaffeepulvers, und nach einer vorgegebenen Strecke mit dem Kaffeepulver in Berührung gelangt.

## Revendications

1. Cafetière (10) comprenant une bouilloire (11) destinée à contenir l'eau à chauffer, un récipient à café (15) destiné à retenir une quantité donnée de café en poudre, et un récipient collecteur (12) destiné à recueillir l'infusion de café produite lorsque l'eau chaude traverse le café en poudre, dans laquelle le récipient à café (15) est en communication d'un côté avec l'intérieur de la bouilloire (11) et de l'autre côté avec un conduit (21) à travers lequel le café est distribué, et comprenant un capuchon de fermeture (23) positionné sur la sortie du conduit (21) de distribution de café pour obturer par gravité ladite sortie du conduit (21) de distribution de café afin de créer une surpression prédéfinie dans la bouilloire (11) par rapport à la pression atmosphérique et qui s'ouvre une fois atteinte ladite surpression dans la bouilloire (11), **caractérisée en ce que** des moyens de retenue (26) sont prévus, montés de façon amovible sur le conduit (21), à la sortie du conduit (21) pour retenir le capuchon de fermeture (23) sur le conduit (21), le capuchon de fermeture (23) étant capable de se déplacer entre une position de fermeture de la sortie du conduit (21) et une position soulevée dans laquelle il est retenu par les moyens de retenue (26).

2. Cafetière selon la revendication 1, dans laquelle ledit capuchon de fermeture (23) est monté sur une buse (22) située sur l'extrémité de sortie du conduit (21).

3. Cafetière selon la revendication 2, dans laquelle le capuchon de fermeture (23) est un cylindre creux, son sommet pressant sur la buse (22), dans laquelle la buse (22) est de forme polygonale, et dans laquelle est prévu un anneau (28) qui est couplé de façon amovible avec le capuchon de fermeture (23) et a une bride interne (29) en face du sommet du capuchon de fermeture (23) de sorte que la buse (22) est située entre ledit sommet et ladite bride, ladite bride (29) étant conçue pour appuyer contre les angles (26) de la buse (22) afin de retenir le capuchon de fermeture (23) sur la buse (22).

4. Cafetière selon la revendication 3, dans laquelle un joint étanche (30) qui obture le trou (27) dans la buse (22) est logé au sommet du capuchon de fermeture (23).

5. Cafetière (40) comprenant une bouilloire (11) destinée à contenir l'eau à chauffer, un récipient à café (15) destiné à retenir une quantité donnée de café en poudre, et un récipient collecteur (12) destiné à recueillir l'infusion de café produite lorsque l'eau chaude traverse le café en poudre, dans laquelle le récipient à café (15) est en communication d'un côté avec l'intérieur de la bouilloire (11) et de l'autre côté avec un conduit (21A) à travers lequel le café est distribué, et comprenant un capuchon de fermeture (23A) positionné sur la sortie du conduit (21A) de distribution de café pour obturer par gravité ladite sortie du conduit (21A) de distribution de café afin de créer une surpression prédéfinie dans la bouilloire (11) par rapport à la pression atmosphérique et qui s'ouvre une fois atteinte ladite surpression dans la bouilloire (11), **caractérisée en ce que** le capuchon de fermeture (23A) est fixé à un couvercle (31) qui est raccordé par une charnière au récipient collecteur (12) et obture l'extrémité du conduit (21A) de distribution de café.

6. Cafetière selon la revendication 5, dans laquelle le capuchon de fermeture (23A) est creux et, avec son sommet, obture une buse (22A) qui est fixée à ladite extrémité du conduit (21A) de distribution de café.

7. Cafetière selon la revendication 6, dans laquelle un joint étanche (30A) qui obture le trou (27A) dans la buse (22A) est logé au sommet du capuchon de fermeture (23A).

8. Cafetière selon l'une quelconque des revendications précédentes, dans laquelle la surpression générée dans la bouilloire (11) par ledit capuchon de fermeture (23 ; 23A) est supérieure à 1,4 bar.

9. Cafetière selon l'une quelconque des revendications précédentes, dans laquelle la bouilloire (11) comprend des moyens de référence (13) qui définissent un rapport volumétrique eau/air dans la bouilloire qui n'excède pas 1/2.

10. Cafetière selon la revendication 9, dans laquelle lesdits moyens de référence (13) définissent un rapport volumétrique eau/air dans la bouilloire qui est inférieur à 1/3.

11. Cafetière selon l'une quelconque des revendications précédentes, dans laquelle le récipient à café (15) comprend une partie coupelle (16) et un tube (17) qui met la partie coupelle (16) en communication avec la bouilloire (11) de sorte que l'eau peut y pénétrer en montant, et dans laquelle la partie coupelle (16) est jointe au tube (17) au moyen d'une portion conique et possède un filtre perforé (18') dans la base de la partie coupelle (16) et un filtre perforé supplémentaire (18"), qui supporte le café en poudre, positionné à une faible distance au-dessus du filtre (18') précédent.

12. Procédé de préparation de café à l'aide d'une cafetière selon l'une quelconque des revendications 1 à 7, dans lequel ladite surpression dans la bouilloire (11) dépasse 1,4 bar.

13. Procédé de préparation de café à l'aide d'une cafetière selon l'une quelconque des revendications 1 à 7 et selon le procédé de la revendication 12, dans lequel le rapport volumétrique eau/air dans la bouilloire (11) ne dépasse pas 1/2.

14. Procédé selon la revendication 13, dans lequel le rapport volumétrique eau/air dans la bouilloire (11) est inférieur à 1:3.

15. Procédé selon l'une quelconque des revendications 12, 13, 14, dans lequel l'écoulement d'eau à travers le récipient à café (15) s'étale jusqu'à ce que sa section transversale soit égale à l'aire de la surface du café en poudre à infuser et, après une distance prédéterminée, l'écoulement d'eau est mis en contact avec le café en poudre.
